# EUROPÄISCHE PATENTANMELDUNG

(11) **EP 4 700 627 A1**
(43) Veröffentlichungstag der Anmeldung: **25.02.2026**
(21) Anmeldenummer: 24195158.1
(22) Anmeldetag: 19.08.2024
(51) Int. Cl.: G06F 21/62, G06F 8/70, G06F 21/64

(54) **SIGNIEREN EINER OBERDATEI MIT EINGEBETTETEN UNTERDATEIEN**

(71) Anmelder: Siemens Aktiengesellschaft, 80333 München (DE)
(72) Erfinder: Fries, Steffen, 85598 Baldham (DE); Güttinger, Andreas, 90765 Fürth (DE); Lambio, Marco, 90552 Röthenbach a. d. Pegnitz (DE)
(74) Vertreter: Siemens Patent Attorneys

(57) **Zusammenfassung**

Es wird ein Verfahren beschrieben, das aufweist:
i) Bereitstellen einer Oberdatei (100) für eine Systemsteuerung, wobei die Oberdatei (100) aufweist: Metadaten (160), eine eingebettete erste Unterdatei (110), eine eingebettete zweite Unterdatei (120), ein erstes Sicherheitselement (111, 112) bezüglich der ersten Unterdatei (110), und ein zweites Sicherheitselement (121, 122) bezüglich der zweiten Unterdatei (120); und
ii) Erstellen eines Oberdatei-Sicherheitselements (101), insbesondere exklusiv, basierend auf:
a) zumindest einem Teil der Metadaten (160) der Oberdatei (100),
b) dem ersten Sicherheitselement (111, 112), und
c) dem zweiten Sicherheitselement (121, 122).

## Beschreibung

### Technisches Gebiet

Die Erfindung bezieht sich auf ein Verfahren für eine Systemsteuerung (z.B. eine Konfiguration, eine Firmware, etc.), wobei das Verfahren aufweist: Bereitstellen einer Oberdatei, wobei die Oberdatei aufweist: Metadaten, eine eingebettete erste Unterdatei, eine eingebettete zweite Unterdatei, ein erstes Sicherheitselement bezüglich der ersten Unterdatei, ein zweites Sicherheitselement bezüglich der zweiten Unterdatei; und wobei das Verfahren weiterhin aufweist: Erstellen eines Oberdatei-Sicherheitselements basierend auf: zumindest einem Teil der Metadaten der Oberdatei, dem ersten Sicherheitselement und dem zweiten Sicherheitselement. Die Erfindung betrifft weiterhin eine Vorrichtung zur Datenverarbeitung, ein Automatisierungssystem und eine spezifische Verwendung.

Die Erfindung kann sich somit auf das technische Gebiet von Systemsteuerungen, wie z.B. Konfigurationen, beziehen.

### Technischer Hintergrund

Eine Systemsteuerung kann eine Verwaltungsoberfläche sein, die es ermöglicht, Einstellungen eines Computersystems zu steuern und anzupassen. Mittels der Systemsteuerung können Konfigurationen, Updates, Firmware und weitere Systemfunktionen verwalten werden. Beispielsweise werden Geräte und ganze Anlagen bei der Inbetriebnahme und auch während des Betriebes entsprechend der geplanten Verwendung konfiguriert. Diese Konfiguration kann auf unterschiedliche Weise erfolgen, zum Beispiel direkt online über ein Konfigurationstool oder auch Datei-basiert.

Die Konfiguration kann dabei in bestimmte Kategorien unterteilt werden. Dies ist insbesondere sinnvoll, wenn unterschiedliche Rollen für unterschiedliche Teile einer Konfiguration verantwortlich sind. Eine Möglichkeit sicherzustellen, dass nur Konfigurationen von autorisierten Personen vorgenommen werde, ist die Anwendung von sogenannter Role-based Access Control (RBAC). RBAC kann im Online-Konfigurationsfall direkt durch ein Konfigurationstool realisiert werden. Im Offline-Konfigurationsfall, oder wenn ein Gerät die Autorisierung der Konfiguration direkt prüfen soll (Ende-zu-Ende), können Konfigurationsdaten auch Datei-basiert bereitgestellt werden. In diesem Fall kann RBAC z.B. über eine digitale Signatur mit einem rollenverbundenen Schlüsselpaar realisiert werden.

Wird die Konfigurationen aus mehreren Konfigurationsdateien zusammengestellt, insbesondere wenn die Konfigurationen von unterschiedlichen Rollen erstellt wird (oder unterschiedliche Komponenten eines Gerätes betroffen sind), kann ein sogenanntes "Bundle" einem Gerät zur Verfügung gestellt werden. Hierbei muss jedoch das Zusammenspiel unterschiedlicher Versionen der Konfigurationsdateien berücksichtigt werden; insbesondere spielt die Kompatibilität der einzelnen Konfigurationsdateien in Bezug auf das zu konfigurierende Gerät (enthaltene Funktionen, Datenmodelle, etc.) sowie die Integrität dieser Zusammenstellung von Konfigurationsinformationen eine wichtige Rolle. Um einen stabilen Betrieb zu gewährleisten, muss daher sichergestellt werden, dass in einem Bundle kompatible Versionen der einzelnen Konfigurationsdateien bereitgestellt sind.

Es sind verschiedene Verfahren zum Schutz der Integrität und Authentizität von Dateien bekannt, insbesondere:
i) Integritätsschutz: z.B. Fingerprinting; hierbei werden Hashwerte (Digest) der zu schützenden Dateien erzeugt. Verwendete Hashfunktionen sind dabei z.B. MD5, SHA1, SHA256.
ii) Authentizitätsschutz: z.B. Signieren; hier können z.B. die oben dargestellten Hashwerte und korrespondierenden Schlüssel verwendet werden, um die Integrität und Authentizität mittels einer digitalen Signatur von ausführbaren Dateien und Skripten sicherzustellen.

Weiterhin können Hashfunktionen mit einem Geheimnis verwendet werden, um damit einen kryptografischen Schutz zu realisieren. Hierbei können bekannte Hashfunktionen in Verfahren mit HMAC (z.B. HMAC-SHA256) oder auch symmetrische Verschlüsselungsverfahren in einem MAC-Mode verwendet werden (z.B. AES-GMAC).

Die Zusammenstellung von verschiedenen Konfigurationsdateien wird häufig in einer Beschreibungsdatei, bzw. einem sogenannten "Manifest" beschrieben, welches Referenzen auf die einzelnen Konfigurationsdateien enthält ("call by reference"). Neben den Referenzen sind typischerweise auch die Hashwerte oder Signaturen der referenzierten Dateien enthalten. Dieses Manifest wird dann generell in seiner Gesamtheit digital signiert (z.B. mittels RSA, ECDSA oder auch PQ-Algorithmen wie DILITHIUM, XMSS, HSS/LMS).

Werden für die Erstellung der Konfiguration bestimmte Rolleninformationen vorausgesetzt und sollen diese auch im Nachgang überprüft werden, kann über eine entsprechende digitale Signatur auch die Bindung an eine Rolle sichergestellt werden. Das kann z.B. durch eine Rolleninformation in einem Zertifikat realisiert werden.

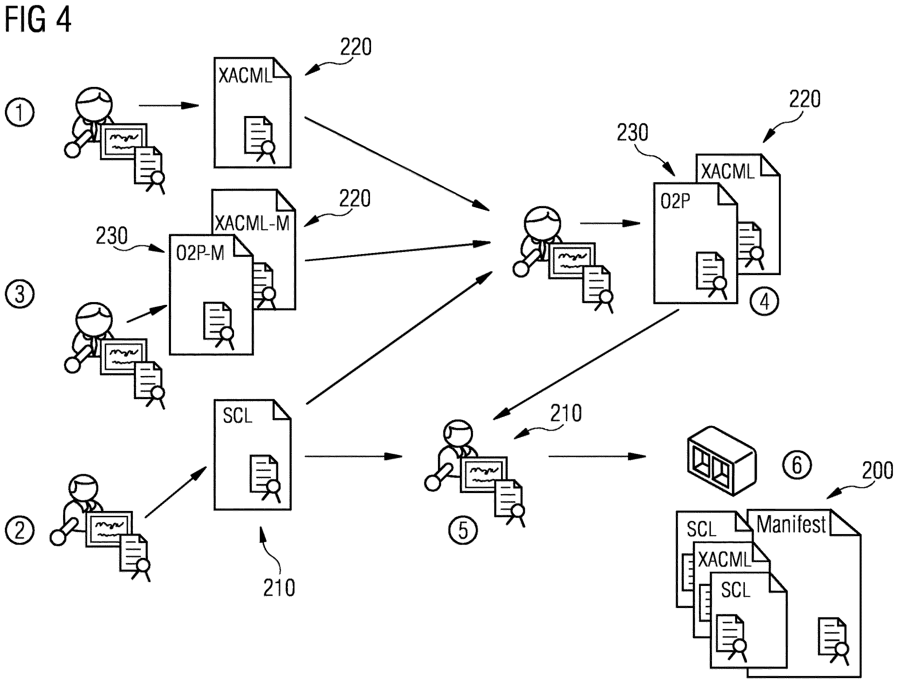

**Figur 4** zeigt beispielhaft den Ablauf einer Konfiguration eines Endgerätes, wobei mehrere Rollen involviert sind. Hier werden zur übersichtlichen Darstellung nur zwei Rollen verwendet (in einer tatsächlichen Implementierung sind sieben oder mehr Rollen nicht ungewöhnlich). Folgende Rollen werden gezeigt:
i) ein Sicherheitsingenieur (security engineer), der eine Datei mit kundenspezifischen Rollendefinitionen und Berechtigungen (permissions) (hier eine XACML Datei) sowie ein Mapping zu den im zu konfigurierenden Gerät befindlichen Objekten (z.B. Objekte eines Datenmodells) erstellt (hier eine O2P Datei). Berechtigung beschreiben typischerweise eine Aktion, die mit einem Objekt durchgeführt wird (z.B. FILEREAD beschreibt eine Berechtigung zum Lesen von Dateien).
ii) ein Systemingenieur (system engineer), der eine Datei mit den im zu konfigurierenden Gerät verfügbaren Objekten (z.B. Objekte eines Datenmodells die mit Funktionen im Gerät verknüpft sind, hier eine SCL Datei) erstellt. Der Systemingenieur erstellt ebenso das oben beschriebene Manifest (die Beschreibungsdatei) und signiert dieses als Ganzes digital.

Folgende Konfigurationsdateien werden in diesem Beispiel verwendet und im Manifest (Bezugszeichen 200) referenziert:
i) SCL Datei (Bezugszeichen 210): beinhaltet die Objekte, die in dem zu konfigurierenden Gerät verfügbar sind. Die Objekte besitzen einen eindeutigen Identifizierer (unique identifier) und sind mit Konfigurationsdaten verknüpft.
ii) XACML Datei (Bezugszeichen 220): beinhaltet die Definitionen von (z.B. herstellerdefinierten oder kundenspezifischen) Rollen und der zugehörigen Berechtigungen sowie weitere Informationen zu den Rollen. Die Berechtigungen sind auch hier durch einen eindeutigen Identifizierer gekennzeichnet.
iii) O2P Datei (Bezugszeichen 230): beinhaltet das Objekt-zu-Berechtigung Mapping basierend auf den eindeutigen Identifizierern (der Objekte im SCL-File sowie den eindeutigen Identifizierern der Berechtigungen in der XACML Datei).

Im Folgenden wird beispielhaft von einer Konfiguration eines Intelligent Electronic Device (IED) mit Daten zu einem rollenbasierten Zugriff im Bereich Energieautomatisierung ausgegangen. Dem IED wird bei der Konfiguration ein Device Configuration Bundle (DCB) übergeben. Dies beinhaltet das Manifest 200, das die verschiedenen enthaltenen Dateien 210, 220, 230 beschreibt, sowie eine Referenz auf diese Dateien. Die Referenz kann eine IED lokale Referenz sein oder aber eine Referenz, unter der das IED die Datei laden kann.

Beispielsweise können folgende Schritte durchgeführt werden:
1) der Sicherheitsingenieur definiert kundenspezifische Berechtigungen in einer XACML Datei.
2) der Systemingenieur konfiguriert die SCL Dateien.
3) der Sicherheitsingenieur exportiert Hersteller-vorbestimmt die XACML-M Berechtigungen und das Objekt-zu-Berechtigung Mapping (O2P-M Datei).
4) der Sicherheitsingenieur vervollständigt die XACML Berechtigungen (XACML Datei) und das Objekt-zu-Berechtigung Mapping (O2P Datei) für eine bestimmte Konfiguration (einen bestimmten Anwendungsfall).
5) der Systemingenieur vervollständigt die Geräte-Konfiguration an dem IED mittels des Manifests 200 und der darin referenzierten Konfigurationsdateien 210, 220, 230.

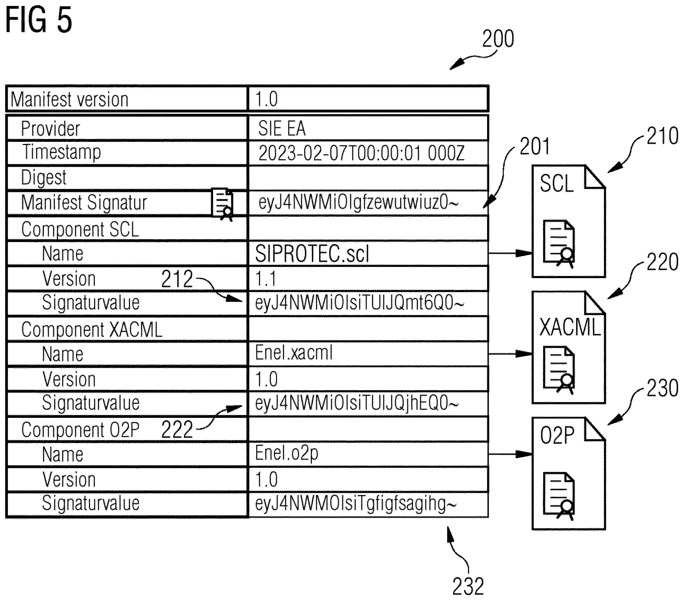

**Figur 5** zeigt detailliert ein Beispiel eines solchen Manifests 200. Das Manifest 200 weist Metadaten auf, wie z.B. Provider und Zeitstempel, und Referenzen zu den oben genannten Konfigurationsdateien 210, 220, 230 ("call by reference"). Für die Generierung eines Manifests 200 werden konventionell zuerst die Signaturwerte (oder auch alternativ die Hashwerte, nicht gezeigt in Figur 5) der referenzierten Konfigurationsdateien 210, 220, 230 berechnet und im Manifest hinterlegt (Bezugszeichen 212, 222, 232). Im Anschluss wird dann das gesamte Manifest 200 signiert, um eine Manifest Signatur 201 zu erhalten.

Vor der Übernahme der Konfigurationswerte verifiziert das IED die Signaturen (oder im Alternativfall die Hashwerte) 212, 222, 232 der Konfigurationsdateien 210, 220, 230 im DCB. Dabei werden sowohl die Signaturen 212, 222, 232 der Konfigurationsdateien 210, 220, 230 als auch die Signatur 201 des gesamten Manifests 200 geprüft. Die Prüfung der Signaturen 212, 222, 232 der Konfigurationsdateien 210, 220, 230 und deren Zusammengehörigkeit muss durch das zu konfigurierende Gerät IED vorgenommen werden, um sicherzustellen, dass die Konfiguration von einer autorisierten Rolle vorgenommen wurden und die Daten integrer sind. Die hier angenommenen Signaturen, aufgrund des gewählten Datenformats der Konfigurationsdateien, sind XML-Signaturen. Es können aber auch alternative Signaturformate und Verfahren verwendet werden, wie z.B. JWS (JOSE), CWT (COSE), CMS, etc.

Wie beschrieben wird das Manifest zusammen mit den Konfigurationsdateien (auf die das Manifest referenziert) als Konfiguration-Bundle verschickt, was zu einem gewissen organisatorischen Aufwand führt, zusätzliche Ressourcen benötigt, und auch Fehler-anfällig sein kann. Insbesondere bei komplexeren Geräten/Anlagen wie einem Automatisierungssystem (mit ein oder mehr Schutzgeräten) kann es notwendig sein eine Mehrzahl von Geräten zu konfigurieren, so dass ein kompaktes Datei-Bundle bevorzugt sein kann.

Prinzipiell können die Konfigurationsdateien auch in das Manifest eingebettet werden, wobei es dann aber relativ (rechen-) aufwendig ist die digitale Signatur über das gesamte Manifest zu erstellen. Insbesondere für Geräte mit eingeschränkten Ressourcen wäre daher eine Lösung wünschenswert, welche die Anzahl der (kryptographischen) Operationen optimiert, ohne dabei aber die Sicherheit herabzusetzen.

### Zusammenfassung der Erfindung

Es kann ein Bedarf bestehen, eine Systemsteuerung effizient und zuverlässig zu betreiben. Ein Verfahren, eine Vorrichtung zur Datenverarbeitung, ein Automatisierungssystem, und ein Verwenden werden im Folgenden beschrieben.

Gemäß einem ersten Aspekt der Erfindung wird ein (insbesondere Computer-implementiertes) Verfahren (für eine Systemsteuerung, insbesondere zum Signieren einer Oberdatei) beschrieben, das aufweist:
i) Bereitstellen einer Oberdatei (z.B. eine Beschreibungsdatei bzw. ein Manifest) für eine Systemsteuerung (z.B. eine Konfiguration, eine Firmware, etc.), wobei die Oberdatei aufweist:
   ia) Metadaten (z.B. Versionsnummer, Informationen zu Algorithmus, Provider, etc.),
   ib) eine eingebettete ("call by value") erste Unterdatei ((z.B. eine Objekt-Datei),
   ic) eine eingebettete zweite Unterdatei (z.B. eine Rollen-Datei, eine Mapping Datei, etc),
   id) ein erstes Sicherheitselement (z.B. ein Digest und/oder ein Signaturwert) bezüglich der ersten Unterdatei, und
   ie) ein zweites Sicherheitselement (z.B. ein Digest und/oder ein Signaturwert) bezüglich der zweiten Unterdatei, und
ii) Erstellen eines Oberdatei-Sicherheitselements (z.B. ein Digest und/oder ein Signaturwert bezüglich der Oberdatei), basierend auf:
   iia) zumindest einem Teil der Metadaten der Oberdatei,
   iib) dem ersten Sicherheitselement (abgelegt/gespeichert in der Oberdatei), und
   iic) dem zweiten Sicherheitselement (abgelegt/gespeichert in der Oberdatei). Insbesondere wird das Oberdatei-Sicherheitselement ausschließlich/exklusiv basierend auf iia)-iic) erstellt (und nicht über die gesamte Oberdatei).

Gemäß einem zweiten Aspekt der Erfindung wird eine Vorrichtung zur Datenverarbeitung (z.B. ein oder mehr Prozessoren) beschrieben, die eingerichtet ist das Verfahren wie oben beschrieben auszuführen.

Gemäß einem dritten Aspekt der Erfindung wird ein Automatisierungssystem beschrieben (z.B. ein Energieautomatisierungssystem), insbesondere aufweisend zumindest ein Schutzgerät, wobei das Automatisierungssystem eine Vorrichtung zur Datenverarbeitung wie oben beschrieben aufweist.

Gemäß einem vierten Aspekt der Erfindung wird ein Verwenden von Metadaten einer Manifest-Oberdatei und Sicherheitselemente bezüglich in der Oberdatei eingebetteten Konfiguration-Unterdateien beschrieben, um ein Oberdatei-Sicherheitselement zu erstellen (bzw. die Manifest-Oberdatei zu signieren).

Gemäß einem exemplarischen Ausführungsbeispiel kann die Erfindung auf der Idee basieren, dass eine Systemsteuerung effizient und zuverlässig betrieben werden kann, wenn die Unterdateien (z.B. Konfigurationsdateien) in der Oberdatei (insbesondere einem Manifest) zusammen mit ihren jeweiligen Sicherheitselementen (z.B. Hashwert, Signaturwert, etc.) eingebettet/gespeichert/abgelegt werden und für das Erstellen des Oberdatei-Sicherheitselements (der digitalen Signatur der Oberdatei) lediglich die Sicherheitselemente der Unterdateien und die Metadaten der Oberdatei verwendet werden. Damit kann die Menge der insgesamt zu signierenden Daten signifikant reduziert werden. Insbesondere kann der Aufwand des Signierens derart reduziert werden, dass das Signieren der Oberdatei mit eingebetteten integritätsgeschützten (Signatur oder Digest) Unterdateien (call by value) mit dem Aufwand des Signierens eines Manifests mit Referenzen zu integritätsgeschützten (Signatur oder Digest) Konfigurationsdateien (call by reference) vergleichbar ist.

Entsprechend kann mit der Oberdatei eine einzige Datei zur Systemsteuerung (z.B. eine einzige Konfigurationsdatei) bereitgestellt werden, in der die Unterdateien vollständig eingebettet sind. Dies kann den organisatorischen Aufwand und benötigte Ressourcen reduzieren, und auch weniger Fehler-anfällig sein kann. Ein kompaktes Daten-Bundle kann somit bereitgestellt werden, das insbesondere bei einer größeren Mehrzahl von zu konfigurierenden Geräten besonders zuverlässig einsetzbar sein kann.

Die Sicherheitselemente der Unterdateien und die Metadaten der Oberdatei sind dabei ausreichend die Integrität und Authentizität der Systemsteuerungsdateien sicherzustellen.

Besonders wichtig kann in diesem Zusammenhang sein, dass die Zusammenstellung der Konfigurationsdateien integer ist hinsichtlich ihrer Versionsnummern und Beschreibung. Das Signieren über die Sicherheitselemente der Unterdateien in Kombination mit den Metadaten als Fingerprint (Hashwert, Digest) der Oberdatei kann dies zuverlässig gewährleisten.

### Exemplarische Ausführungsbeispiele

Gemäß einem Ausführungsbeispiel weist das erste Sicherheitselement und/oder das zweite Sicherheitselement auf: ein Integrität-Sicherheitselement, insbesondere eine Prüfsumme, weiter insbesondere einen Hashwert (bzw. einen Digestwert). Dies kann den Vorteil haben, dass etablierte und zuverlässige Methoden direkt eingesetzt werden können. Um die Integrität von Dateien sicherzustellen, kann in bekannter Weise z.B. ein Hashwert über diese Datei berechnet werden. Bereits eine kleine Änderung an der Datei verändert den Hashwert, so dass die Integrität in einfache rund effizienter Weise sichergestellt werden kann. Eine Prüfsumme kann z.B. mittels Hashfunktionen wie SHA-256, SHA-512 oder durch eine digitale Signatur mittels Verfahren wie RSA oder ECDSA erstellt werden.

Gemäß einem Ausführungsbeispiel weist das erste Sicherheitselement und/oder das zweite Sicherheitselement auf: ein Authentizität-Sicherheitselement, insbesondere ein Signaturwert. Dies kann den Vorteil haben, dass etablierte und zuverlässige Methoden direkt eingesetzt werden können. Um die Authentizität von Dateien sicherzustellen, kann eine Datei in bekannter Weise digital signiert werden. Beispielsweise kann der berechnete Hashwert/Digest signiert werden. Das Erstellen einer Signatur weist typischerweise eine kryptografische Operation wie z.B.. ein Verschlüsseln auf. In anderen Worten kann in einem Beispiel ein Signaturwert dadurch erstellt werden, dass ein Digestwert mit einem privaten Schlüssel verschlüsselt wird. Entsprechend kann die Authentizität dadurch überprüft werden, dass der Digestwert mit einem korrespondierenden öffentlichen Schlüssel wieder entschlüsselt wird (und damit die Integrität des Hashwerts geprüft werden kann). Anschauliche Beispiele für digitale Signaturen sind RSA, ECDSA oder auch PQ-Algorithmen wie DILITHIUM, XMSS, HSS/LMS.

Gemäß einem Ausführungsbeispiel weist das Oberdatei-Sicherheitselement ein Oberdatei-Integrität-Sicherheitselement (z.B. eine Prüfsumme, einen Hashwert/Digestwert, einen Fingerprint) und/oder ein Oberdatei-Authentizität-Sicherheitselement (z.B. einen Signaturwert) auf. In analoger Weise zu den Unterdateien kann auch die Oberdatei mit einem oder mehr Sicherheitselementen gesichert bzw. signiert werden.

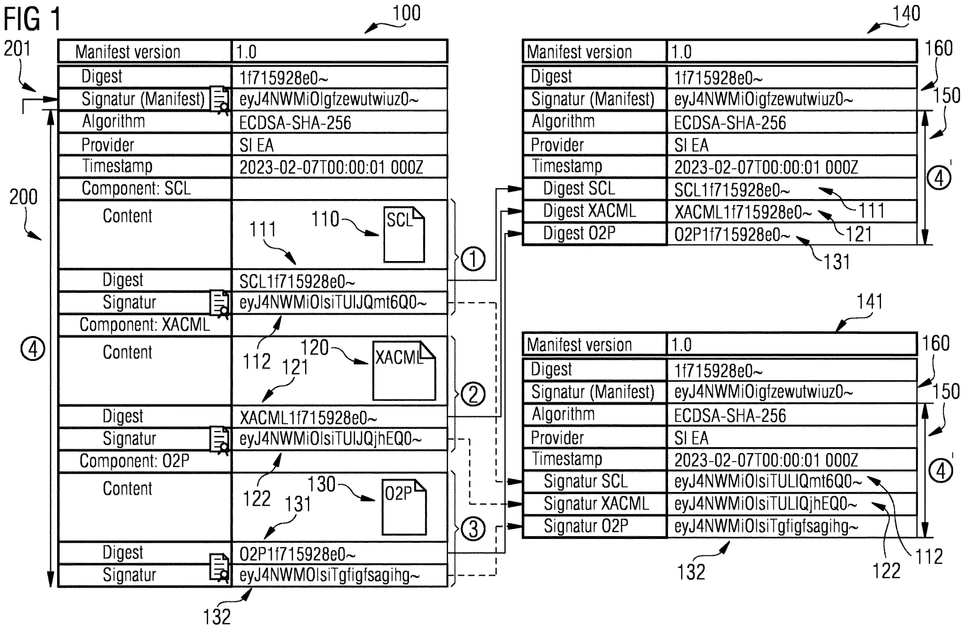

Gemäß einem Ausführungsbeispiel ist das Verfahren frei von einem Erstellen des Oberdatei-Sicherheitselements basierend auf der Oberdatei (als solcher). Gemäß einem Ausführungsbeispiel ist das Verfahren frei von einem Erstellen des Oberdatei-Sicherheitselements basierend auf der gesamten Oberdatei. Dies kann den Vorteil haben, dass Rechenaufwand und Ressourcen reduziert werden können. Wie z.B. für Figur 1 beschrieben, wird konventionell eine Signatur über das ganze Manifest (Beschreibung und enthaltene weitere integritätsgeschützte Konfigurationsdateien) erstellt. In einem bevorzugten Ausführungsbeispiel wird die Oberdatei-Signatur aber eben nur über einen kleinen Datensatz erstellt, nämlich Metadaten der Oberdatei und Sicherheitselemente der Unterdateien.

Gemäß einem Ausführungsbeispiel weisen die Metadaten zumindest eines der folgenden auf: einen Algorithmus, insbesondere einen kryptografischen Algorithmus, einen Provider, einen Zeitstempel, einen Header (bzw. einen Beschreibungsteil), ein Inhaltsverzeichnis, eine Beschreibung, eine Geräteklasse, eine Hierarchie, eine geographische Lokalität, eine Versionsnummer, eine URL. Als "Metadaten" können in diesem Kontext Daten verstanden werden, welche die Systemsteuerung/Oberdatei beschreiben bzw. Informationen bezüglich der Oberdatei (und auch der Unterdateien) bereitstellen. Eine Vielzahl von Informationen können in diesem Kontext als Metadaten dienen, die im Folgenden gelisteten stellen lediglich Beispiele dar: Versionsnummer der Oberdatei, Bereitsteller der Oberdatei, Struktur der Konfigurationsdateien (ein File, mehrere Files, in Block im Manifest, etc.). Insbesondere bei komplexen Geräten/Anlagen (die örtlich verteilt sind) kann auch der geografische Ort der Anwendung wichtig sein.

Gemäß einem Ausführungsbeispiel kann pro enthaltener (eingebetteter) Unterdatei zumindest eine der folgenden Informationen bereitgestellt werden: Keyword (Unterdatei), Name (Instanz der Unterdatei; Dateiname), Beschreibung (welcher Teil eines Gerätes ist betroffen), Version (Version der Unterdatei), Prüfsumme der Unterdatei., genutzter Algorithmus zum Berechnen der Prüfsumme, Zeitstempel, URL unter der weitere Konfigurationsdaten geladen werden können.

Gemäß einem Ausführungsbeispiel ist zumindest eine der Unterdateien als zumindest eine der folgenden eingerichtet:
i) eine Objekt-Datei, die Objekte des zu konfigurierenden Geräts beinhaltet.
ii) eine Rollen-Datei, welche die Rollen und deren Berechtigungen definiert.
iii) eine Mapping-Datei, welche die Objekte und Rollen einander zuweist.

Diese (Konfigurations-) Dateien werden in dem Beispiel der Figur 4 verwendet und beziehen sich auf eine typische Anwendung. Jedoch kann es eine Vielzahl weiterer möglicher Unterdateien geben.

In einem Beispiel weist die Objekt-Datei eine SCL-Datei auf. Diese beinhaltet die Objekte, die in einem IED verfügbar sind. Die Objekte besitzen einen eindeutigen Identifizierer und beinhalten Konfigurationsdaten. In einem Beispiel weist die Rollen-Datei eine XACML-Datei auf. Diese beinhaltet die Definitionen von (kundenspezifischen und/oder herstellerspezifischen) Rollen und der zugehörigen Berechtigungen sowie weitere Informationen zu den Rollen. Die Berechtigungen sind auch hier durch einen eindeutigen Identifizierer gekennzeichnet. In einem Beispiel weist die Mapping-Datei eine O2P-Datei auf. Diese beinhaltet z.B. das Objekt-zu-Berechtigung Mapping basierend auf den eindeutigen Identifizierern der Objekte in der SCL-Datei sowie den eindeutigen Identifizierern der Berechtigungen in der XACML-Datei.

Gemäß einem Ausführungsbeispiel ist die Oberdatei als Systemsteuerung-Beschreibungsdatei, insbesondere als Manifest, ausgestaltet. Diese etablierte Organisationsstruktur kann ein effizientes und kompaktes Durchführen einer Systemsteuerungsoperation ermöglichen. Gemäß einem Ausführungsbeispiel ist die Oberdatei als Software-Container eingerichtet. Dadurch kann ein sicheres und effizientes Organisieren und Transportieren einer oder einer Vielzahl von Dateien gelingen.

Gemäß einem Ausführungsbeispiel weist das Verfahren ferner auf: Strukturieren der Oberdatei derart, dass das erste Sicherheitselement und das zweite Sicherheitselement zusammengefasst sind, insbesondere in Kombination in der Oberdatei abgelegt sind. Dies kann den Vorteil haben, dass eine übersichtliche Organisation vorliegt. Beispielsweise können die Sicherheitselemente, die zum Erstellen des Oberstruktur-Sicherheitselements verwendet werden, nebeneinander/hintereinander/untereinander in einem gemeinsamen Speicherbereich vorgesehen sein, beispielsweise zusammen mit den Metadaten.

Gemäß einem Ausführungsbeispiel liegen das erste Sicherheitselement und das zweite Sicherheitselement in einem gemeinsamen Speicherbereich der Oberdatei vor. Beispielsweise kann ein Speicherbereich vorgesehen sein, der speziell für die Sicherheitselemente der Unterdateien vorgesehen ist. Dieser kann z.B. Digestwerte, Signaturwerte, oder beides aufweisen. In einem Beispiel können die eigentlichen Unterdateien außerhalb oder anschließend an diesen gemeinsamen Speicherbereich in der Oberdatei abgelegt sein. Dies hat den Vorteil, dass Daten, für die ein Digestwert und/oder ein Signaturwert berechnet werden soll, zusammenhängend in den Arbeitsspeicher geladen werden können und somit die Berechnung (Erstellung und Verifikation) über einem kontinuierlichen Datenbereich erfolgen kann.

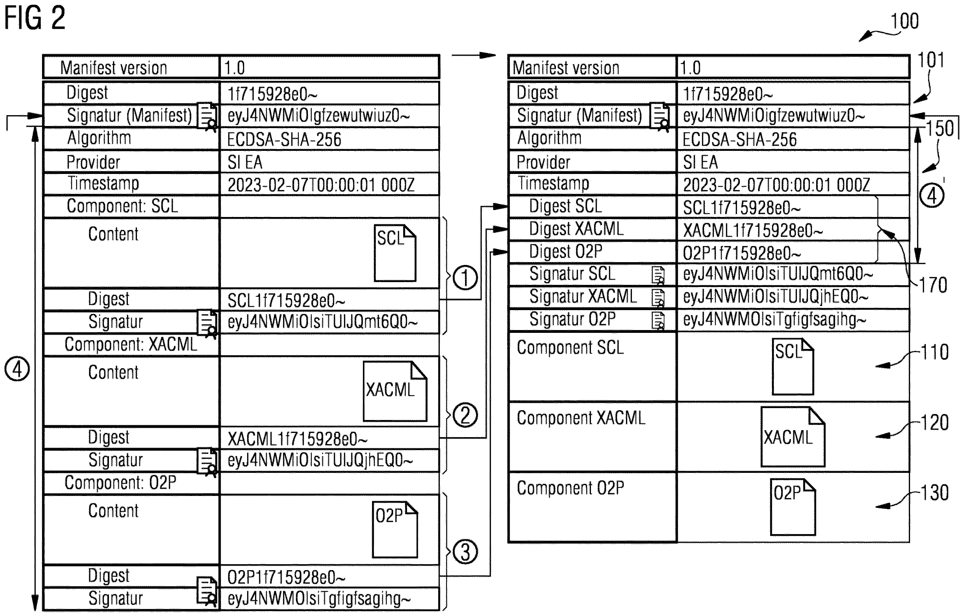

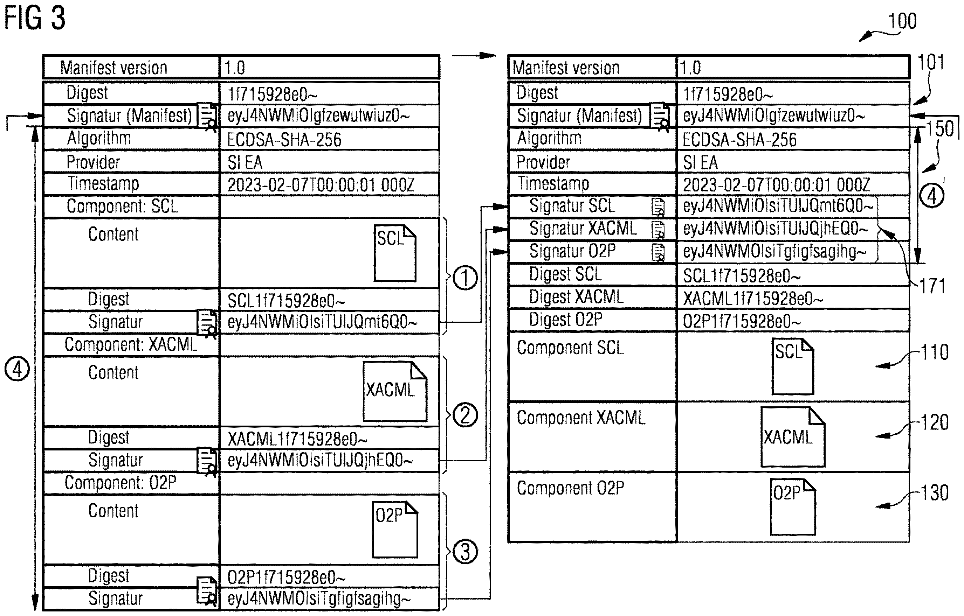

Gemäß einem Ausführungsbeispiel liegt auch zumindest der Teil der Metadaten (der für die digitale Signatur der Oberstruktur verwendet wird) in dem gemeinsamen Speicherbereich vor. Diese Architektur ist z.B. bezüglich der Figuren 2 und 3 beschrieben. Die Sicherheitselemente werden direkt benachbart zu den Metadaten hinterlegt, so dass in einfacher und zuverlässiger Weise das Oberstruktur-Sicherheitselement über diesen gemeinsamen Speicherbereich erstellt werden kann.

Gemäß einem Ausführungsbeispiel wird das Oberdatei-Sicherheitselement, insbesondere exklusiv, basierend auf dem gemeinsamen Speicherbereich erstellt. Der gemeinsame Speicherbereich kann daher vorteilhaft so strukturiert sein, dass alle Daten zum Erstellen des Oberdatei-Sicherheitselements bereits vorhanden sind.

Gemäß einem Ausführungsbeispiel werden das erste Sicherheitselement und das zweite Sicherheitselement mit demselben Algorithmus generiert. Dadurch kann eine zuverlässige Datenintegrität ermöglicht werden.

In einem Beispiel kann eine weitere Optimierung durch die Wahl der Algorithmen möglich sein. Wenn sichergestellt werden kann, dass alle Teil-Signaturen mit demselben Algorithmus realisiert werden, ist es ausreichend im Manifest den Signaturalgorithmus festzulegen. Alle Signaturgenerierungen und Signaturverifikationen werden dann mit diesem durchgeführt. Diese Optimierung kann eine Änderung des jeweiligen Standards (z.B. RFC 5652 oder auch XML DigSig) benötigen, denn die genutzten Algorithmen sind typischerweise keine optionalen Informationen in der Signedlnfo (in XML DigSig) oder SignedData oder Signerlnfo (in RFC 5652) .

Gemäß einem Ausführungsbeispiel wird das Verfahren zum Konfigurieren eines Geräts und/oder Updaten des Geräts und/oder Einrichten einer Firmware auf dem Gerät verwendet. Diese Anwendungen können typische Operationen der Systemsteuerung sein, welche mit dem beschriebenen Verfahren direkt umgesetzt werden können.

Gemäß einem Ausführungsbeispiel weist das Verfahren ferner zumindest einen der folgenden Schritte auf:
i) Einbetten (call-by-value) einer ersten Unterdatei (z.B. eine Objekt-Datei) und einer zweiten Unterdatei (z.B. eine Rollen-Datei, eine Mapping Datei, etc.) in der Oberdatei,
ii) Erstellen eines ersten Sicherheitselements (z.B. ein Digest und/oder ein Signaturwert) bezüglich der ersten Unterdatei und Ablegen des ersten Sicherheitselements (in einem Speicherbereich) in der Oberdatei,
iii) Erstellen eines zweiten Sicherheitselements (z.B. ein Digest und/oder ein Signaturwert) bezüglich der zweiten Unterdatei und Ablegen des zweiten Sicherheitselements (in dem Speicherbereich, insbesondere in einem gemeinsamen Speicherbereich) in der Oberdatei.

Gemäß einem Ausführungsbeispiel weist die Oberdatei drei oder mehr eingebettete Unterdateien (und zugehörige Sicherheitselemente) auf.

Gemäß einem exemplarischen Ausführungsbeispiel kann der Aufwand der Signaturgenerierung und auch -verifikation bei Konfigurationsdateien, eingebettet in ein Manifest als Container, im Vergleich zu aus einem Manifest referenzierten Konfigurationsdateien gleich gehalten werden. Dies kann durch einen optimierten Prozess der Signaturgenerierung und -verifikation ermöglicht werden. Ebenso kann durch eine angepasste Struktur des Manifests erreicht werden, dass die zu signierenden Datenbereiche zusammenhängend sind und nicht für eine Signaturgenerierung/Verifikation separat zusammengestellt werden müssen.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Figur 1 zeigt eine Oberdatei mit eingebetteten Unterdateien und zu signierende Abschnitte, gemäß einem exemplarischen Ausführungsbeispiel der Erfindung.
Figuren 2 und 3 zeigen jeweils einen gemeinsamen Speicherbereich der Oberdatei und zu signierende Abschnitte, gemäß weiteren exemplarischen Ausführungsbeispielen der Erfindung.
Figur 4 zeigt ein Konfigurieren eines Geräts mit einem Konfiguration-Bundle und unterschiedlichen Rollen.
Figur 5 zeigt ein konventionelles Manifest, das auf die Konfigurationsdateien verweist.

### Detaillierte Beschreibung der Zeichnungen

Die Darstellung in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

**Figur 1** zeigt eine Oberdatei 100 mit eingebetteten Unterdateien 110, 120, 130 und zu signierende Abschnitte 150, gemäß einem exemplarischen Ausführungsbeispiel der Erfindung. Die Oberdatei 100 ist als Beschreibungsdatei bzw. Manifest für eine Konfiguration vorgesehen. Die Oberdatei 100 weist im Header Metadaten 160 auf, z.B. den kryptografischen Algorithmus, den Provider, und einen Zeitstempel. In diesem Beispiel sind drei Konfigurationsdateien als Unterdateien direkt in die Oberdatei 100 eingebettet:
i) SCL-Datei 110,
ii) XACML-Datei 120, und
iii) O2P-Datei 130.

Über jede Unterdatei 110, 120, 130 wurde jeweils ein Hashwert berechnet, der hier als Digest 111, 121, 131 in der Oberdatei 100 gespeichert ist. Ferner wurde über jeden Digest 111, 121, 131 mittels einem kryptografischen Algorithmus ein jeweiliger Signaturwert 112, 122, 132 erstellt und ebenfalls in der Oberdatei 100 gespeichert. Der Digest 111, 121, 131 bzw. der Signaturwert 112, 122, 132 können jeweils auch als Sicherheitselement bezeichnet werden. Das jeweilige Erstellen von Digest und Signaturwert pro Unterdatei 110, 120, 130 ist hier schematisch als Schritte 1 bis 3 dargestellt.

Konventionell wird eine digitale Signatur eines Manifest nun über das gesamte Manifest erstellt, was relativ Rechnen-aufwendig ist, da schon einmal signierte Daten damit ein zweites Mal komplett signiert werden. Diese Operation ist als Schritt 4 dargestellt, und die entsprechend erstellte konventionelle Signatur ist mit Bezugszeichen 201 versehen.

Erfindungsgemäß wird dieser Schritt 4 aber bevorzugt nicht durchgeführt. Stattdessen werden die bereits erwähnten Metadaten 160 der Oberdatei 100 herangezogen sowie zumindest ein Sicherheitselement pro Unterdatei 110, 120, 130. Auf der rechten Seite von Figur 1 sind zwei Beispiele hiervon dargestellt. Im oberen Beispiel werden die Digestwerte 111, 121, 131 verwendet und im unteren Falle sind es die Signaturwerte 112, 122, 132, die für das Erstellen des Oberstruktur-Sicherheitselements (bzw. der Oberstruktur-Signatur) verwendet werden. In beiden Fällen wird ein Auszug 140, 141 gewählt, der die Metadaten 160 und die jeweiligen Sicherheitselemente aufweist.

Für das Erstellen des Oberdatei-Sicherheitselements (z.B. der digitalen Signatur) der Oberdatei 100 (als Schritt 4' dargestellt) wird der gezeigte Abschnitt 150 verwendet, der die Metadaten 160 und die Sicherheitselemente als Digestwerte 111, 121, 131 oder Signaturwarte 112, 122, 132 enthält.

In anderen Worten: dargestellt sind das Manifest 100 und die entsprechenden signierten Unterstrukturen (Komponenten) 110, 120, 130. Im Manifest 100 sind die Konfigurationsinformationen der Dateien SCL, XACML und O2P direkt als Unterstrukturen enthalten. Jede der Unterstrukturen wird entsprechend digital signiert (Schritte 1, 2, 3). Die Information zum Digest 111, 121, 131 der Nachricht und zur Signatur 112, 122, 132 sind im Manifest 100 enthalten. Der Digest entspricht dem Hash über die signierten Daten. Der bekannte Ansatz, eine Signatur 201 über das komplette Manifest 100 mit den eingebetteten Konfigurationsinformationen zu erstellen, ist auf der linken Seite als Schritt 4 gezeigt. Hier wird der Digest über das Manifest berechnet und dann signiert. Die erfindungsgemäße Lösung der Signaturberechnung ist auf der rechten Seite als Schritt 4' gezeigt. Anstelle die Signatur über alle Daten im Manifest 100 (erneut) zu berechnen, werden nur die Metadaten 160 sowie die bisherigen berechnenden Digestwerte 111, 121, 131 pro Unterstruktur für die Berechnung herangezogen (Variante 1). Alternativ zu den Digestwerten 111, 121, 131 können auch direkt die Signaturwerte 112, 122, 132 verwendet werden (Variante 2). Damit reduziert sich die Menge der zu signierenden Daten der eingebetteten Version auf ungefähr den Aufwand der Manifest Version mit Referenzen.

**Figuren 2** **und** **3** zeigen jeweils einen gemeinsamen Speicherbereich 170, 171 der Oberdatei 100 und zu signierende Abschnitte 150, gemäß weiteren exemplarischen Ausführungsbeispielen der Erfindung. Die Oberdatei 100 wird derart strukturiert, dass das erste Sicherheitselement 111, 112 und das zweite Sicherheitselement 121, 122 zusammengefasst sind und in Kombination in der Oberdatei 100 abgelegt sind. Das erste Sicherheitselement 111, 112 und das zweite Sicherheitselement 121, 122 liegen in dem gemeinsamen Speicherbereich 170, 171 der Oberdatei 100 vor, wobei auch zumindest der Teil der Metadaten 160 in dem gemeinsamen Speicherbereich 170, 171 vorliegt.

**Figur 2**: die Oberdatei 100 ist derart strukturiert, dass die Digestwerte 111, 121, 131 zusammenhängend und direkt unter den Metadaten 160 gespeichert sind. Über diesen gemeinsamen Speicherbereich 170 als zu signierendem Abschnitt 150 kann nun direkt die digitale Signatur der Oberdatei erstellt werden.

**Figur 3**: die Oberdatei 100 ist derart strukturiert, dass die Signaturwerte 112, 122, 132 zusammenhängend und direkt unter den Metadaten 160 gespeichert sind. Über diesen gemeinsamen Speicherbereich 171 als zu signierendem Abschnitt 150 kann nun direkt die digitale Signatur der Oberdatei erstellt werden.

In anderen Worten: eine weitere Optimierung ist durch Änderung der Manifest Struktur möglich. Dabei werden in der neuen Struktur die Metadaten 160 sowie die Digestwerte (Variante 1) oder die Signaturwerte (Variante 2) der weiteren Konfigurationsdateien 110, 120, 130 zusammengefasst, so dass ein zusammenhängender Speicherbereich 170, 171 entsteht, über den dann die Signatur des Manifests 100 berechnet werden kann. Für die Variante 1 wird die Struktur des Manifests 100 so angepasst, dass die Digestwerte 111, 121, 131 der jeweiligen Unterstrukturen 110, 120, 130 einfach in die Signaturberechnung des Manifests 100 mit einbezogen werden können. Die Anpassung der Manifest Struktur für Variante 2 ermöglicht die einfache Signaturberechnung des Manifests 100 unter Einbeziehung der Signaturwerte 112, 122, 132 der jeweiligen Unterstrukturen 110, 120, 130. Diese dargestellten Optimierungen sind nur durch die Wahl des Manifest Formates und der Manifest Struktur möglich; Änderungen an den genutzten Signaturformaten sind nicht notwendig.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffs sind Personen männlicher, weiblicher oder anderer Geschlechteridentität mit umfasst.

### Bezugszeichen

- 100: Oberdatei, Manifest
- 101: Oberdatei-Sicherheitselement
- 110: Erste Unterdatei, Objekt-Datei
- 111: Erstes Sicherheitselement, erster Digestwert
- 112: Erstes Sicherheitselement, erster Signaturwert
- 120: Zweite Unterdatei, Rollen-Datei
- 121: Zweites Sicherheitselement, zweiter Digestwert
- 122: Zweites Sicherheitselement, zweiter Signaturwert
- 130: Dritte Unterdatei, Mapping-Datei
- 131: Drittes Sicherheitselement, dritter Digestwert
- 132: Drittes Sicherheitselement, dritter Signaturwert
- 140, 141: Auszug
- 150: Abschnitt zum Erstellen des Oberdatei-Sicherheitselements
- 160: Metadaten
- 170, 171: Gemeinsamer Speicherbereich

- 200: Konventionelles Manifest
- 201: Konventionelle Manifest-Signatur
- 210, 220, 230: Konventionelle Konfigurationsdateien
- 212, 222, 232: Konventionelle Signaturen

## Patentansprüche

1. Ein Computer-implementiertes Verfahren, aufweisend:
Bereitstellen einer Oberdatei (100) für eine Systemsteuerung, wobei die Oberdatei (100) aufweist:
Metadaten (160),
eine eingebettete erste Unterdatei (110),
eine eingebettete zweite Unterdatei (120),
ein erstes Sicherheitselement (111, 112) bezüglich der ersten Unterdatei (110), und
ein zweites Sicherheitselement (121, 122) bezüglich der zweiten Unterdatei (120); und
Erstellen eines Oberdatei-Sicherheitselements (101), insbesondere exklusiv, basierend auf:
zumindest einem Teil der Metadaten (160) der Oberdatei (100),
dem ersten Sicherheitselement (111, 112), und
dem zweiten Sicherheitselement (121, 122).

2. Das Verfahren gemäß Anspruch 1,
wobei das erste Sicherheitselement (111, 112) und/oder das zweite Sicherheitselement (121, 122) zumindest eines der folgenden aufweist:
ein Integrität-Sicherheitselement, insbesondere eine Prüfsumme, weiter insbesondere einen Hashwert/Digestwert/Fingerprint (111, 121);
ein Authentizität-Sicherheitselement, insbesondere einen Signaturwert (112, 122).

3. Das Verfahren gemäß einem der vorhergehenden Ansprüche,
wobei das Verfahren frei ist von einem Erstellen des Oberdatei-Sicherheitselements (201) basierend auf der, insbesondere gesamten, Oberdatei (100).

4. Das Verfahren gemäß einem der vorhergehenden Ansprüche,
wobei die Metadaten (160) zumindest eines der folgenden aufweisen: einen Algorithmus, insbesondere einen kryptografischen Algorithmus, einen Provider, einen Zeitstempel, einen Beschreibungsteil, eine Beschreibung, ein Inhaltsverzeichnis, eine Geräteklasse, eine Hierarchie, eine geographische Lokalität, eine Versionsnummer, eine URL.

5. Das Verfahren gemäß einem der vorhergehenden Ansprüche,
wobei zumindest eine der Unterdateien (110, 120) als zumindest eine der folgenden eingerichtet ist:
eine Objekt-Datei, insbesondere eine SCL-Datei,
eine Rollen-Datei, insbesondere eine XACML-Datei,
eine Mapping-Datei, insbesondere eine O2P-Datei.

6. Das Verfahren gemäß einem der vorhergehenden Ansprüche,
wobei die Oberdatei (100) als Systemsteuerung-Beschreibungsdatei, insbesondere als Manifest, ausgestaltet ist; und/oder
wobei die Oberdatei (100) als Software-Container eingerichtet ist.

7. Das Verfahren gemäß einem der vorhergehenden Ansprüche, ferner aufweisend:
Strukturieren der Oberdatei (100) derart, dass das erste Sicherheitselement (111, 112) und das zweite Sicherheitselement (121, 122) zusammengefasst sind, insbesondere in Kombination in der Oberdatei (100) abgelegt sind.

8. Das Verfahren gemäß einem der vorhergehenden Ansprüche,
wobei das erste Sicherheitselement (111, 112) und das zweite Sicherheitselement (121, 122) in einem gemeinsamen Speicherbereich (170, 171) der Oberdatei (100) vorliegen.

9. Das Verfahren gemäß Anspruch 8,
wobei zumindest der Teil der Metadaten (160) in dem gemeinsamen Speicherbereich (170, 171) vorliegt.

10. Das Verfahren gemäß einem der vorhergehenden Ansprüche,
wobei das Oberdatei-Sicherheitselement (101), insbesondere exklusiv, basierend auf dem gemeinsamen Speicherbereich (170, 171) erstellt wird.

11. Das Verfahren gemäß einem der vorhergehenden Ansprüche,
wobei das erste Sicherheitselement (111, 112) und das zweite Sicherheitselement (121, 122) mit demselben Algorithmus generiert werden.

12. Das Verfahren gemäß einem der vorhergehenden Ansprüche,
wobei das Verfahren zum Konfigurieren eines Geräts und/oder Updaten des Geräts und/oder Einrichten einer Firmware auf dem Gerät verwendet wird.

13. Eine Vorrichtung zur Datenverarbeitung, die eingerichtet ist das Verfahren nach einem der vorhergehenden Ansprüche auszuführen.

14. Ein Automatisierungssystem, insbesondere aufweisend zumindest ein Schutzgerät, das eine Vorrichtung zur Datenverarbeitung gemäß Anspruch 13 aufweist.

15. Verwenden von Metadaten (160) einer Manifest-Oberdatei (100) und Sicherheitselemente (111, 121, 112, 122) bezüglich in der Oberdatei (100) eingebetteten Konfiguration-Unterdateien (110, 120), um ein Oberdatei-Sicherheitselement (101) zu erstellen.
